# DEMANDE DE BREVET EUROPEEN

(11) **EP 1 077 027 A1**
(43) Date de publication de la demande: **21.02.2001**
(21) Numéro de dépôt: 00401989.9
(22) Date de dépôt: 10.07.2000
(51) Int. Cl.: A01K 61/00, B01J 10/00, C02F 1/78, C02F 1/70, C02F 103/22, A01K 63/04

(54) **Procédé d'amélioration des conditions d'élevage de poissons fonctionnant en eau ozonée**

(30) Priorité: 18.08.1999 FR 9910603
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Grimberg, Aurélie, 92210 Saint-Cloud (FR); Rabillier, Jean-Marc, 78280 Guyancourt (FR)
(74) Mandataire: Mellul-Bendelac, Sylvie Lisette

(57) **Abrégé**

L'invention concerne un procédé d'amélioration des conditions d'élevage de poissons et produits de la mer, élevage du genre où l'on procède à un traitement à l'ozone (20, 21, 22, 51) de tout ou partie de l'eau qui alimente au moins un des bassins (1,54) d'élevage du site, se caractérisant en ce que l'on procède à un traitement chimique (30, 31, 70, 71) du courant d'eau ozonée qui alimente le bassin d'élevage, avant qu'il n'atteigne ce bassin, par ajout -in situ et en continu- d'une espèce chimique réductrice, pour réaliser l'élimination substantielle des éventuels sous-produits oxydants du traitement de l'eau à l'ozone, et/ou du résiduel d'ozone dans l'eau.

## Description

La présente invention concerne les domaines de l'aquaculture et la pisciculture, et s'adresse en particulier aux élevages où l'on procède à un traitement à l'ozone de tout ou partie de l'eau qui alimente le ou les bassins d'élevage du site utilisateur.

Si le traitement à l'ozone de tels élevages a fait l'objet d'une littérature très abondante (on se reportera par exemple à la demande de brevet français au nom de la Demanderesse FR-99 06567 qui s'intéresse à l'ozonation d'élevages fonctionnant en circuit fermé), soulignant l'intérêt considérable qu'il y a à traiter l'eau qui alimente les bassins (sanitaire, productivité...), reste qu'il subsiste des difficultés et des questions concernant la mise en oeuvre des traitements d'ozonation, liées notamment au fait que les espèces résiduelles d'un traitement à l'ozone peuvent être toxiques pour les espèces élevées, qu'il s'agisse du résiduel d'ozone lui-même dans le milieu, ou encore de tous les sous-produits oxydants provenant des réactions d'oxydation de l'ozone sur le milieu (en particulier sur l'eau de mer).

Les solutions existantes, rapportées dans la littérature (filtre à charbon actif, « stripping ».....), pour éliminer ces traces d'ozone ou de sous-produits oxydants se révèlent peu satisfaisantes dans le cadre de la pisciculture, et notamment pour le traitement à l'ozone de l'eau de mer : soit parce que leur coût d'exploitation est élevé, soit encore parce qu'elles se révèlent non rentables pour les débits d'eau à traiter élevés, ou encore tout simplement parce qu'elle se révèle non applicable à l'eau de mer.

L'un des objectifs de la présente invention est alors notamment de proposer un procédé permettant d'améliorer les conditions d'élevage de poissons et autres produits de la mer (pisciculture et aquaculture), mettant en oeuvre un traitement à l'ozone de tout ou partie de l'eau qui alimente les bassins d'élevage, qu'il s'agisse d'élevage en eau de mer ou en eau douce, et que ces élevages fonctionnent en circuit fermé ou en circuit ouvert, un des buts visés étant de ne pas être limité dans les taux de traitement d'ozone appliqués, tout en assurant une réelle sécurité pour les espèces élevées.

La présente invention concerne alors un procédé d'amélioration des conditions d'élevage en pisciculture ou aquaculture, élevage du genre où l'on procède à un traitement à l'ozone de tout ou partie de l'eau qui alimente au moins un bassin d'élevage, et se caractérisant en ce que l'on procède à un traitement chimique du courant d'eau ozonée qui alimente ledit bassin d'élevage, avant qu'il n'atteigne le bassin, par ajout d'une espèce chimique réductrice, pour réaliser l'élimination substantielle des éventuels sous-produits oxydants du traitement de l'eau à l'ozone, et/ou du résiduel d'ozone dans l'eau, de la manière suivante :
on effectue l'ajout de l'espèce chimique réductrice in situ, et en continu, sur une ligne, qui est reliée en sa partie aval audit bassin d'élevage, et en sa partie amont à un point où s'effectue le traitement d'ozonation dudit courant d'eau.

Le procédé selon l'invention pourra également adopter l'une ou plusieurs des caractéristiques suivantes :
- on effectue une évaluation de la teneur en ozone dissout et/ou en sous-produits oxydants de l'eau, en aval du point d'adjonction de l'espèce réductrice, et on rétroagit le cas échéant, en fonction du résultat de cette évaluation, sur les conditions d'adjonction de l'espèce réductrice dans le courant d'eau ;
- on effectue une évaluation de la teneur en ozone dissout et/ou en sous-produits oxydants de l'eau, en amont du point d'adjonction de l'espèce réductrice, et on régule en fonction du résultat de ladite évaluation les conditions d'adjonction de l'espèce réductrice ;
- on ajuste l'ajout de l'espèce chimique réductrice en fonction du taux d'ozonation du dit courant d'eau ozonée, l'ajustement étant effectué au niveau stoechiométrique ;
- on effectue une évaluation de la teneur en ozone dissout et/ou en sous-produits oxydants de l'eau, en aval du point d'adjonction de l'espèce réductrice, ladite évaluation s'effectuant à l'aide d'un système fonctionnant sur le principe du potentiel redox, pour fournir une valeur relative, apte à déclencher selon le résultat de l'évaluation, une alarme et/ou une rétroaction sur les conditions d'adjonction de l'espèce réductrice ;
- le point où s'effectue le traitement d'ozonation est muni de l'un ou plusieurs des éléments suivants : un élément de transfert gaz/liquide en ligne tel un mélangeur statique ou un hydro-injecteur, et un contacteur tel une tour de contact ;
- ledit élevage fonctionne en circuit fermé, selon lequel :
   a) on recycle au moins une partie de l'eau d'au moins un bassin d'élevage, eau recyclée qui subit un ou plusieurs traitements d'épuration, avant d'être réinjectée dans le bassin considéré ;
   b) sur le parcours de recyclage de l'étape a), l'eau recyclée est mélangée à un apport d'eau neuve ;
   c) on procède à une ozonation de tout ou partie de l'eau recyclée, et le cas échéant de plus à une ozonation de tout ou partie de l'apport d'eau neuve avant son mélange avec l'eau recyclée ;
      l'ajout de l'espèce chimique réductrice étant effectué sur le circuit de recirculation d'eau, en aval du point où s'effectue l'ozonation.
- ledit élevage fonctionne en circuit fermé, selon lequel :
   a) on recycle au moins une partie de l'eau d'au moins un bassin d'élevage, eau recyclée qui subit un ou plusieurs traitements d'épuration, avant d'être réinjectée dans le bassin considéré ;
   b) sur le parcours de recyclage de l'étape a), l'eau recyclée est mélangée à un apport d'eau neuve ;
   c) on procède à une ozonation de tout ou partie de l'apport d'eau neuve, avant son mélange avec l'eau recyclée ;
      l'ajout de l'espèce chimique réductrice étant effectué dans l'apport d'eau neuve ozonée avant son mélange avec l'eau recyclée, ou bien dans le mélange d'eau recyclée et d'eau neuve ozonée, avant que ce mélange n'atteigne le bassin d'élevage.
- l'ajout de l'espèce réductrice est effectué par ajouts dosés, dans le courant d'eau à traiter chimiquement, d'une solution d'un sel de ladite espèce réductrice.

D'autres caractéristiques et avantages de l'invention ressortiront de la description suivante, donnée uniquement à titre illustratif et nullement limitatif, et faite en référence aux dessins annexés sur lesquels :
- la figure 1 est une représentation schématique d'un exemple d'installation d'élevage de poissons d'eau de mer en circuit fermé conforme à l'invention ;
- la figure 2 est une représentation schématique d'un exemple d'installation d'élevage de poissons d'eau de mer en circuit ouvert conforme à l'invention.

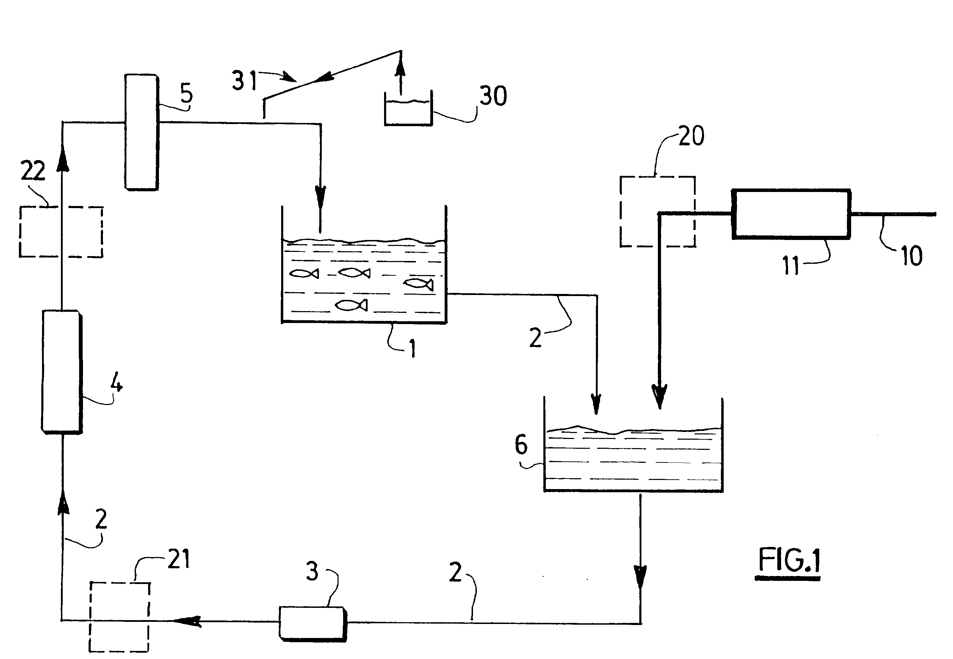

On a illustré sur la figure 1 la présence d'un bassin 1 d'élevage de poissons d'eau de mer (un bassin ou un des bassins du site d'élevage considéré), dont on recycle au moins une partie de l'eau de mer par la ligne de recirculation 2.

L'eau de mer ainsi recirculée subit sur son parcours un certain nombre d'étapes d'épuration, parmi lesquelles on peut trouver un passage sur un filtre mécanique 3, un passage dans un filtre biologique 4 (nitrifiant puis dénitrifiant), ainsi qu'une colonne de dégazage 5 permettant notamment d'éliminer le dioxyde de carbone ou encore l'azote dissout.

Par ailleurs, on note sur la droite de la figure un apport d'eau neuve (via la ligne 10 représentée sur la figure en trait épais, le mélange entre l'eau recirculée en provenance du bac 1 et l'apport d'eau neuve étant effectué au niveau d'un bac de rétention 6.

Pour le mode de réalisation représenté, l'apport d'eau neuve passe, avant d'atteindre le bac de rétention 6, par une étape de filtration mécanique 11, voire par un échangeur thermique (non représenté sur la figure), pour amener le cas échéant l'apport d'eau neuve à température optimale de croissance des espèces.

On a représenté sur la figure, par des rectangles dessinés en ligne discontinue, des exemples de localisations d'injection de gaz ozoné permettant d'effectuer le traitement d'ozonation de l'eau, respectivement sur la ligne d'apport d'eau neuve en aval du système de filtration mécanique (20), sur la ligne de recyclage de l'eau du bassin 1, en provenance du bac de rétention 6, en amont et en aval (21 et 22) du filtre biologique 4.

On reconnaît alors sur cette figure 1 l'arrivée, sur la ligne de recirculation 2, en aval de la colonne de dégazage 5, d'une adjonction d'une espèce réductrice, ici pour le mode de réalisation représenté en provenance d'un bac 30 contenant une solution de bisulfite de sodium.

Comme il apparaîtra clairement à l'homme du métier, on privilégie selon l'invention l'utilisation d'espèces chimiques réductrices ne représentant pas de caractère toxique pour les espèces élevées, ni initialement (forme réduite) ni après réaction (forme oxydée).

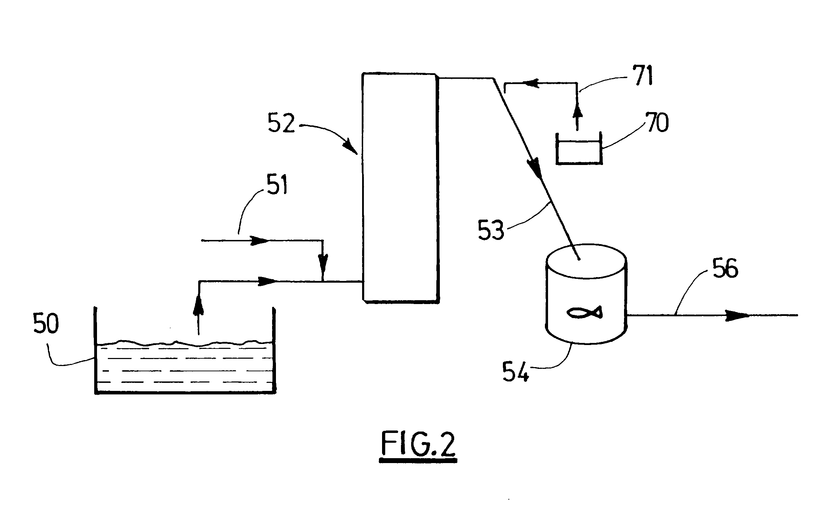

La figure 2 illustre pour sa part le cas d'un élevage de poissons d'eau de mer fonctionnant en circuit ouvert (comme en atteste la flèche 56 en sortie de bassin d'élevage 54), figure où l'on reconnaît la présence d'une source ou réserve 50 d'eau de mer à traiter, l'adjonction au courant d'eau de mer en provenance de la source 50 d'un gaz ozoné 51, l'eau de mer ainsi ozonée traversant un bassin (ou tour) de contact 52.

On alimente alors, à partir de cette tour de contact 52, et via une canalisation 53, le bassin d'élevage 54, l'ajout de la solution d'un sel du type sulfite se faisant ici (70,71) au niveau de la ligne 53, donc en aval de la tour de contact 52.

Lors d'une première série d'essais réalisés en laboratoire, et en mode batch, on a testé des échantillons d'eau de mer (en provenance d'un élevage de turbots fonctionnant en circuit fermé), traités selon la démarche suivante :
1) essais de réduction des oxydants initialement présents dans l'eau de mer (avant ozonation) par ajout de meta-bisulfite de sodium : utilisation d'une solution titrée à 1 g/litre, dans des proportions allant de 1 à 4 fois la stoechiométrie calculée par rapport aux oxydants initiaux mesurés;
2) ozonation d'échantillons d'eau de mer/ taux de traitement retenus : 0.1, 0.2, 0.3, 0.5 et 1 mg O3 par litre d'eau de mer ;
3) suivi des oxydants résiduels générés par l'ozonation, en fonction du temps (par la méthode spectrophotométrique - dosage du chlore total par le réactif coloré DPD);
4) neutralisation des oxydants résiduels générés par l'ozonation et mesure des oxydants résiduels après un tel traitement de neutralisation (ajout du bisulfite en quantité stoechiométrique par rapport aux oxydants mesurés).

On retire alors les enseignements suivants de cette première série d'essais :
i) les oxydants résiduels générés par l'ozonation présentent une décroissance très lente lorsqu'ils ne sont pas neutralisés pas l'ajout de bisulfite (pouvant atteindre 15 minutes ou plus, selon le taux de traitement d'ozonation utilisé) ;
j) l'ajout d'une quantité stochiométrique de bisulfite permet de neutraliser les oxydants formés, la réaction étant d'ailleurs très rapide (en moins d'une minute, la teneur résiduelle en oxydant redescend à la valeur initiale dans l'eau avant ozonation) ;
k) ces oxydants initialement présents dans l'eau de mer ne sont pas neutralisés par le bisulfite, même pour des traitement allant jusqu'à 4 fois la stoechiométrie.

Une seconde série d'essais a été réalisée sur une installation d'élevage telle que celle représentée dans le cadre de la figure 2, dans les conditions suivantes :
1) un débit de 1600 l/h d'eau de mer en circuit ouvert (56) est traité en continu pendant 14 h, les taux de traitement d'ozone testés étant situés dans la gamme préférée selon l'invention i.e entre 0,05 et 2 mg d'ozone/litre.
   Un réacteur colonne (52) assure un temps de contact.
   Sur la canalisation de sortie du réacteur colonne (53), une solution (70) de métabisulfite de sodium Na₂S₂O₅ à 200 mg/l est ajoutée à l'aide d'une pompe doseuse, en conditions de stoechiométrie molaire de ratio 1/1 par rapport à la quantité d'ozone introduit dans l'eau.
   Après moins de 10 secondes, l'eau ainsi traitée alimente un bac (54) contenant des alevins de bars de 1g.
2) on suit la teneur en oxydants dans le bac des poissons, par un dosage manuel spectrophotométrique du chlore total par le réactif coloré DPD à 530 nm
   (méthode HACH n° 8311, mode opératoire HACH 80 pour le spectrophotomètre portatif DR 2010) :
   - sans traitement ozone, la teneur des oxydants est de 0,02 mg Cl₂/l (± 0.01 mg/l) ;
   - avec traitement ozone et sans neutralisation par le bisulfite, la teneur en oxydants est de 0,08 mg Cl₂/l (± 0.01 mg/l) ;
   - avec traitement ozone suivi de la neutralisation au bisulfite de sodium, la teneur en oxydants est de 0,02 mg Cl₂/l (± 0.01 mg/l) ;
3) on observe les poissons (au nombre de 200) dans l'eau ainsi traitée, par comparaison d'un lot de poissons témoin, dans un bassin similaire alimenté par de l'eau non traitée. On observe le comportement des poissons et on réalise des histogrammes sur les organes sensibles : yeux, foie, muqueuses.
   On retire alors les enseignements suivants de cette seconde série d'essais :
   i) aux doses de traitement ozone pratiquées, le comportement des poissons n'est pas modifié (avec ou sans neutralisation au bisulfite de sodium).
   j) avec traitement ozone et sans neutralisation des oxydants résiduels, 20 % des poissons présentent des séquelles bénignes (phénomènes d'irritation non spécifique).
   k) avec traitement ozone suivi d'une neutralisation des oxydants résiduels par le bisulfite de sodium, le taux de détection de phénomène d'irritation bénigne est identique à celui du lot de poisson témoin (pour lequel l'eau n'avait pas été traitée à l'ozone).

On conçoit alors à la lumière de toute la description qui précède, que dans un contexte où l'utilisation de l'ozone dans les élevages piscicoles et aquacoles se généralise, mais où subsistent dans certaines configurations des difficultés de mise en oeuvre des traitements d'ozonation, le procédé selon la présente invention apporte incontestablement une réponse très attractive et prometteuse pour l'amélioration des conditions de tels élevages fonctionnant en conditions de traitement à l'ozone.

Comme on l'a déjà signalé plus haut, on privilégie selon l'invention l'utilisation d'espèces chimiques réductrices ne représentant pas de caractère toxique pour les espèces élevées, ni initialement (forme réduite) ni après réaction (forme oxydée).

On a montré les excellents résultats obtenus par l'utilisation d'une espèce réductrice ajoutée du type sulfite. A titre illustratif, l'espèce ajoutée peut comporter avantageusement un groupement du type sulfite SO₃²⁻, bisulfite HSO₃⁻, méta -bisulfite S₂O₅²⁻ u encore thiosulfate S₂O₃²⁻.

## Revendications

1. Procédé d'amélioration des conditions d'élevage de poissons et/ou produits de la mer, élevage du genre où l'on procède à un traitement à l'ozone (20, 21, 22, 51) de tout ou partie de l'eau qui alimente au moins un bassin (1,54) d'élevage, caractérisé en ce que l'on procède à un traitement chimique (30, 31, 70, 71) du courant d'eau ozonée qui alimente ledit au moins un bassin d'élevage, avant qu'il n'atteigne ce bassin, par ajout d'une espèce chimique réductrice, pour réaliser l'élimination substantielle des éventuels sous-produits oxydants du traitement de l'eau à l'ozone, et/ou du résiduel d'ozone dans l'eau, de la manière suivante :
on effectue l'ajout de l'espèce chimique réductrice in situ et en continu sur une ligne (2, 53), reliée en sa partie aval audit bassin d'élevage, et en sa partie amont à un point où s'effectue le traitement d'ozonation dudit courant d'eau.

2. Procédé selon la revendication 1, caractérisé en ce que l'on effectue une évaluation de la teneur en ozone dissout et/ou en sous-produits oxydants de l'eau, en aval du point d'adjonction de l'espèce réductrice, et on rétroagit le cas échéant, en fonction du résultat de ladite évaluation, sur les conditions d'adjonction de l'espèce réductrice.

3. Procédé selon la revendication 1, caractérisé en ce que l'on effectue une évaluation de la teneur en ozone dissout et/ou en sous-produits oxydants de l'eau, en amont du point d'adjonction de l'espèce réductrice, et on régule en fonction du résultat de ladite évaluation les conditions d'adjonction de l'espèce réductrice.

4. Procédé selon la revendication 1, caractérisé en ce que l'on ajuste l'ajout de l'espèce chimique réductrice en fonction du taux d'ozonation du dit courant d'eau ozonée, l'ajustement étant effectué au niveau stoechiométrique.

5. Procédé selon la revendication 1, caractérisé en ce que l'on effectue une évaluation de la teneur en ozone dissout et/ou en sous-produits oxydants de l'eau, en aval du point d'adjonction de l'espèce réductrice, à l'aide d'un système fonctionnant sur le principe du potentiel redox, pour fournir une valeur relative, apte à déclencher selon le résultat de l'évaluation, une alarme et/ou une rétroaction sur les conditions d'adjonction de l'espèce réductrice.

6. Procédé selon l'une des revendications 1 à 5, caractérisé en ce que le point où s'effectue le traitement d'ozonation est muni de l'un ou plusieurs des éléments suivants : un élément de transfert gaz/liquide en ligne tel un mélangeur statique ou un hydro-injecteur, et un contacteur tel une tour de contact.

7. Procédé selon l'une des revendications précédentes, caractérisé en ce que ledit élevage fonctionne en circuit fermé, selon lequel :
a) on recycle (2) au moins une partie de l'eau d'au moins un bassin (1) d'élevage, eau recyclée qui subit un ou plusieurs traitements d'épuration (3, 4, 5), avant d'être réinjectée dans le bassin considéré ;
b) sur le parcours de recyclage de l'étape a), l'eau recyclée est mélangée à un apport d'eau neuve (10);
c) on procède à une ozonation de tout ou partie de l'eau recyclée (20, 21, 22), et le cas échéant de plus à une ozonation de tout ou partie de l'apport d'eau neuve (20) avant son mélange avec l'eau recyclée;
et en ce que l'on effectue ledit ajout de l'espèce chimique réductrice (30, 31) sur la recirculation, en aval du point d'ozonation de l'eau recyclée.

8. Procédé selon la revendication 7, caractérisé en ce que l'eau neuve qui est ozonée l'est par injection d'un gaz comportant de l'ozone, de façon à obtenir un taux de traitement en ozone compris entre 0,5 et 15 mg d'ozone/litre, et plus préférentiellement entre 2 et 10 mg d'ozone/litre d'eau.

9. Procédé selon l'une des revendications 1 à 7, caractérisé en ce que le taux de traitement du dit courant d'eau ozonée est compris entre 0,05 et 2 mg d'ozone/litre, et plus préférentiellement entre 0,05 et 0,5 mg d'ozone/litre d'eau.

10. Procédé selon l'une des revendications 1 à 6, caractérisé en ce que ledit élevage fonctionne en circuit fermé, selon lequel :
a) on recycle (2) au moins une partie de l'eau d'au moins un bassin (1) d'élevage, eau recyclée qui subit un ou plusieurs traitements d'épuration (3, 4, 5), avant d'être réinjectée dans le bassin considéré ;
b) sur le parcours de recyclage de l'étape a), l'eau recyclée est mélangée à un apport d'eau neuve (10);
c) on procède à une ozonation (20) de tout ou partie de l'apport d'eau neuve avant son mélange avec l'eau recyclée ;
et en ce que on effectue l'ajout de l'espèce chimique réductrice à l'une des localisations suivantes :
- dans l'apport d'eau neuve ozonée avant son mélange avec l'eau recirculée ;
- dans le mélange d'eau recirculée et d'apport d'eau neuve ozonée, avant que le mélange n'atteigne ledit bassin d'élevage.

11. Procédé selon l'une des revendications précédentes, caractérisé en ce que l'on effectue l'ajout de l'espèce réductrice par ajouts dosés, dans le courant d'eau à traiter chimiquement, d'une solution d'un sel de ladite espèce.

12. Procédé selon la revendication 11, caractérisé en ce que l'espèce réductrice ajoutée est du type sulfite : tel que comportant un groupement du type sulfite SO₃²⁻, bisulfite HSO₃⁻, méta -bisulfite S₂O₅²⁻ ou encore thiosulfate S₂O₃²⁻.

13. Installation d'amélioration des conditions d'élevage de poissons ou produits de la mer, élevage du genre où l'on procède à un traitement à l'ozone (20, 21, 22, 51) de tout ou partie de l'eau qui alimente au moins un bassin (1, 54) d'élevage, caractérisée en ce qu'elle comporte des moyens (30, 31, 70, 71) permettant d'effectuer un ajout d'une espèce chimique réductrice, pour réaliser l'élimination substantielle des éventuels sous-produits oxydants du traitement de l'eau à l'ozone, et/ou du résiduel d'ozone dans l'eau, de la manière suivante :
lesdits moyens permettent d'effectuer l'ajout de l'espèce chimique réductrice in situ et en continu sur une ligne (2, 53) de l'installation, reliée en sa partie aval audit bassin d'élevage, et en sa partie amont à un point où s'effectue le traitement d'ozonation dudit courant d'eau.

14. Installation selon la revendication 13, caractérisée en ce qu'elle comporte des moyens d'évaluation de la teneur en ozone dissout et/ou en sous-produits oxydants de l'eau, sur la dite ligne, en aval du point d'adjonction de l'espèce réductrice, ainsi que des moyens de retroagir, le cas échéant, en fonction du résultat de ladite évaluation, sur les conditions d'adjonction de l'espèce réductrice.

15. Installation selon la revendication 13, en ce qu'elle comporte des moyens d'évaluation de la teneur en ozone dissout et/ou en sous-produits oxydants de l'eau, sur la dite ligne, en amont du point d'adjonction de l'espèce réductrice, et des moyens de régulation, en fonction du résultat de ladite évaluation, des conditions d'adjonction de l'espèce réductrice.

16. Installation selon la revendication 13, caractérisée en ce qu'elle comporte des moyens d'évaluation de la teneur en ozone dissout et/ou en sous-produits oxydants de l'eau, sur la dite ligne, en aval du point d'adjonction de l'espèce réductrice, ces moyens utilisant un système fonctionnant sur le principe du potentiel redox, pour fournir une valeur relative, aptes à déclencher selon le résultat de l'évaluation, une alarme ou à rétroagir sur les conditions d'adjonction de l'espèce réductrice.

17. Installation selon l'une des revendications 13 à 16, caractérisée en ce que lesdits moyens d'ajout d'une espèce réductrice comporte une source de solution d'un sel de ladite espèce.

18. Installation selon la revendication 17, caractérisée en ce que l'espèce réductrice ajoutée est du type sulfite : tel que comportant un groupement du type sulfite SO₃²⁻, bisulfite HSO₃⁻, méta -bisulfite S₂O₅²⁻ ou encore thiosulfate S₂O₃²⁻.
